# EUROPEAN PATENT APPLICATION

(11) **EP 2 908 282 A1**
(43) Date of publication of application: **19.08.2015**
(21) Application number: 13844684.4
(22) Date of filing: 09.10.2013
(51) Int. Cl.: G06Q 50/18, G06F 17/30

(54) **FORENSIC SYSTEM, FORENSIC METHOD, AND FORENSIC PROGRAM**

(30) Priority: 10.10.2012 JP 2012225103
(71) Applicant: Ubic, Inc., Minato-ku, Tokyo 108-0075 (JP)
(72) Inventor: MORIMOTO Masahiro, Tokyo 108-0075 (JP); SHIRAI Yoshikatsu, Tokyo 108-0075 (JP); TAKEDA Hideki, Tokyo 108-0075 (JP)
(74) Representative: Klunker . Schmitt-Nilson . Hirsch
(86) International application number: PCT/JP2013/077441
(87) International publication number: WO 2014/057963

(57) **Abstract**

Disclosed is a forensic system capable of reducing the burden of review of a reviewer for relevance determination.

The forensic system includes a display unit that displays at least one document in a document group that includes a plurality of documents included in the digital information to a user; a classification information receiving unit that receives classification information assigned to a target document which is a document for determination of whether the document is related to a lawsuit by a user in the document group, based on the determination of whether the document is related to the lawsuit by the user; a score updating unit that updates a score of a document in the document group corresponding to predetermined classification information based on a comparison result between a feature value of the target document of which the classification information is received and a feature value of the document in the document group; and a display control unit that controls a display order of the documents in the document group to be displayed by the display unit based on the updated scores.

## Description

### Technical Field

The present invention relates to a forensic system, a forensic method and a forensic program, and more particularly, to a forensic system, a forensic method and a forensic program for collecting document information relating to a lawsuit.

### Background Art

In the related art, when a crime or a legal dispute relating to a computer such as unauthorized access or confidential information leakage occurs, means or a technique for collecting and analyzing devices, data or electronic records necessary for cause examination or criminal investigation to clarify legal evidentiality has been proposed.

Further, in a US civil suit, since eDiscovery (electronic discovery) or the like is required, both an accuser and a defendant in a lawsuit should submit related digital information as evidence. Thus, digital information recorded in a computer or a server should be presented as evidence.

On the other hand, in the current business world, since most information is prepared by a computer due to the rapid development and spread of IT technology, a large amount of digital information is oversupplied even in the same company.

For this reason, in the course of performing preparation work for producing evidentiary materials for a court of law, an error in which confidential digital information that is not necessarily related to a lawsuit is included as the evidentiary materials may easily occur. Further, confidential document information that is not related to the lawsuit may also be produced.

In recent years, a technique relating to document information in a forensic system has been proposed in PTL 1 to PTL 3. PTL 1 discloses a forensic system that designates a specific person from at least one target person included in target person information related to a document submission order, extracts only digital document information that is accessed by the specific person based on access history information relating to the designated specific person, sets accessory information indicating whether each of the document files of the extracted digital document information is related to the lawsuit, and outputs a document file relating to the lawsuit based on the accessory information.

Further, PTL 2 discloses a forensic system that displays recorded digital information, sets target person specifying information indicating which person among target persons included in target person information each of the plurality of document files relates to, sets the set target person specifying information to be recorded in a storing unit, designates at least one target person, retrieves a document file in which the target person specifying information corresponding to the designated target person is set, sets accessory information indicating whether the retrieved document file is related to a lawsuit, and outputs the document file relating to the lawsuit based on the accessory information through a display unit.

In addition, PTL 3 discloses a forensic system that receives designation of at least one document file included in digital document information, receives designation of a language for translating the designated document file, translates the document file in which the designation is received into the language in which the designation is received, extracts a common document file that represents the same content as that of the designated document file from the digital document information recorded in a recording unit, generates translation related information indicating that the extracted common document file is translated by quoting the translation content of the translated document file, and outputs a document file relating to a lawsuit based on the translation relevancy information.

### Citation List

### Patent Literature

[PTL 1] JP-A-2011-209930
[PTL 2] JP-A-2011-209931
[PTL 3] JP-A-2012-32859

### Summary of Invention

### Technical Problem

However, for example, in the forensic system in PTL 1 to PTL 3, a huge amount of document information related to target persons who use a plurality of computers and a server should be collected.

Work for determining whether the huge amount of digital document information is valid as evidentiary materials for a lawsuit should be performed by visual confirmation of a user called a reviewer, and the document information should be determined piece by piece, which causes a large amount of labor and time to be expended.

The invention has been made in consideration of such situations, and an object of the invention is to provide a forensic system, a forensic method, and a forensic program for reducing the burden of review of a reviewer.

### Solution to Problem

According to an aspect of the invention, there is provided a forensic system that acquires digital information recorded in a plurality of computers or a server and analyzes the acquired digital information, including: a display unit that displays at least one document in a document group that includes a plurality of documents included in the digital information to a user; a classification information receiving unit that receives classification information assigned to a target document which is a document for determination of whether the document is related to a lawsuit by a user in the document group, based on the determination of whether the document is related to the lawsuit by the user; a score updating unit that updates a score of a document in the document group corresponding to predetermined classification information based on a comparison result between a feature value of the target document of which the classification information is received and a feature value of the document in the document group; and a display control unit that controls a display order of the documents in the document group to be displayed by the display unit based on the updated scores.

The "document" refers to data including one or more words. As an example of the "document", electronic mail, presentation material, spreadsheet material, a meeting reference, a contract, an organization chart, a business plan or the like may be used. Further, the document has a score corresponding to each piece of classification information, and the score may be calculated by adding or deducting a value calculated based on a comparison result between a feature value of a target document associated with the classification information and a feature value of each document to or from an initial score assigned in advance to each document in the document group to be updated.

The "document group" is configured of a plurality of documents.

The "display unit" refers to a unit that is used to present a document to a user. The document displayed in the display unit becomes a determination target regarding whether the document is related to a lawsuit by the user. The operation of determining whether the document is related to the lawsuit by the user is referred to as "review". The review is performed to classify a document (here, referred to as a target document) that is a review target into plural types of documents based on the degree of relevance and the type of relevance of the target document to a lawsuit, and assigns classification information to each type of document.

The "display control unit" sends an instruction to the display unit through a communication network to control the order of documents to be displayed. For example, the display control unit may perform the control so that the documents are displayed in the display unit in an ascending order of scores.

The "classification information receiving unit" refers to a unit that receives the classification information assigned to the target document after the review by the user.

The "classification information" refers to information assigned to a document that is a classification target, and indicates relevance to a lawsuit to be easily used therein. The classification information may be recorded as accessory information to each document, or may be recorded in such a manner that a correspondence relationship between the classification information and the document is recorded in a database. The classification information may represent a keyword such as "Responsive" indicating that a document is related to a lawsuit, "HOT" indicating that a document is an especially important document in a lawsuit, or "Non-Responsive" indicating that a document is not related to a current lawsuit, for example.

The "score updating unit" refers to a unit that compares a feature value of a target document of which classification information is received by the classification information receiving unit with a feature value of a document included in the document group and updates a score corresponding to the received classification information. Further, the score updating unit may calculate a feature value using tendency information including the classification type of each word that frequently appears in a document, an evaluation value of each word, and the number of appearances of each word. The score updating unit may perform score increase or score deduction according to a matching rate of the feature values. The document that is a comparison target may include the target document, or may exclude the target document. For example, when the target document is included in the comparison target, since the feature values completely match each other, a corresponding point is added to the score to be updated.

The "score" refers to a value obtained by quantitatively evaluating the degree of relevance between a document and classification information. Each document may be prepared in such a manner that a corresponding score is recorded in a database with respect to each piece of predetermined information. For example, a case where respective documents are classified into three types of classification information related to classification information "HOT", "Responsive" and "Non-Responsive" in the review will be described as an example. In this case, each document may include secure regions where three types of scores of "Hot", "Responsive" and "Non-Responsive" are recorded in a database. Further, when any one of the three types of scores exceeds a predetermined threshold value, classification information corresponding to the excessive score may be assigned.

Each document may assign an initial score based on a predetermined condition. For example, the initial score may be calculated based on words that appear in a document, and an evaluation value of each word. Further, a specific value may be assigned as the initial score in all the documents. Score increase or score deduction is performed with respect to the initial score to update the score.

The "feature value" refers to a value used to measure a similarity degree between respective documents. The feature value may be calculated by the score updating unit using tendency information including the type of each word that frequently appears in a document, an evaluation value of each word, and the number of appearances of each word. Further, the score updating unit may refer to the amount of transmission information related to the word when calculating the feature value.

In addition, the forensic system according to the aspect of the invention may further include: an exclusion determining unit that determines that a document of which a score reaches a specific value is excluded from candidates of documents to be displayed by the display unit; and a control unit that performs a control so that processes of the display unit, the classification information receiving unit, the score updating unit, and the display control unit, and the exclusion determining unit can be repeatedly executed until the number of the documents determined to be excluded exceeds a predetermined value.

The "exclusion determining unit" refers to a unit that determines that, when a score is updated, a document of which a score after updating reaches a specific value is excluded from candidate targets of documents to be displayed by the display unit. The exclusion determining unit may perform termination determination for each piece of classification information as a previous stage of the exclusion determination. For example, in the review, when three types of classification information are assigned, the exclusion determining unit may exclude a document having passed through the termination determination with respect to all of the three types of classification information from the candidates of the target documents. Further, when only the score for one type of classification information exceeds the specific value and the termination determination is performed with respect to the identifier, the exclusion determining unit may assign a mark indicating that the termination determination has been performed with respect to the classification information having the excessive score to the corresponding document. Further, the exclusion determination and the termination determination may have two specific values as threshold values. For example, when the score exceeds one of the two threshold values due to score increase or when the score becomes smaller than the other threshold value due to score deduction, the exclusion determination and the termination determination may be performed.

The "control unit" refers to a unit that performs a control so that the processes of the display unit, the classification information receiving unit, the score updating unit, and the exclusion determining unit can be repeatedly executed. The control unit may repeat the processes one by one in a cycle. Further, the control unit may repeat the processes in such a manner that a predetermined amount of processes are executed in a batch manner and subsequent processes are then executed. The control unit terminates the control process when the exclusion determination is performed with respect to all the documents included in the document group or the target group.

Further, the forensic system according to the aspect of the invention may further include an automatic assigning unit that assigns the classification information to the documents in the document group based on the updated score.

The "automatic assigning unit" refers to a unit that automatically determines and assigns classification information suitable for each document according to a score. The automatic assigning unit may provide a threshold value for each type of classification information, and may assign corresponding classification information to a document of which a score exceeds the threshold value.

In addition, the forensic system according to the aspect of the invention may further include a database that records a score corresponding to the classification information with respect to the document included in the document group and updates the score for each piece of classification information whenever the score updating unit updates the score. The document, the assigned classification information, the score corresponding to each piece of classification information, threshold value excessive score information, or the like may be recorded in the database.

Further, the forensic system according to the aspect of the invention may further include a classifying unit that classifies the document group into groups based on a predetermined condition and selects at least one target group that is a processing target from among the groups, and the display unit may extract a document group to be displayed to the user from the target group selected by the classifying unit.

The "predetermined condition" refers to a classification condition. The predetermined condition may be arbitrarily determined by a user. For example, the predetermined condition may include a year when a document is prepared, an extension of the document, a creator of the document, a security level of the document, or the like.

The "group" refers to a group obtained by classifying the document group. The group may include a plurality of documents. When the document group is classified into the groups, the control unit may terminate the process when all the documents included in the target group pass through the exclusion determination.

The "target group" refers to a group that is a target to be reviewed by the user in the groups. A document group to be displayed by the display unit is extracted from the target group. The display order of the documents may be controlled by the display control unit for each target group. Further, if the process performed by the control unit is completed for all the documents in the target group, the next group may be selected as a target document.

In addition, the forensic system according to the aspect of the invention may further include a group comparing unit that compares a feature value of each document included in the target group with a feature value of each document included in the group for which the determination of whether the document is related to the lawsuit by the user is completed, and the display control unit may control a display order of a document group to be displayed from the target group by the display unit based on a comparison result of the group comparing unit.

The "group comparing unit" refers to a unit that performs comparison of features of documents between groups. For example, the group comparing unit may use the feature value of the document included in the group for which the determination of whether the document is related to the lawsuit by the user is completed as a comparison target, to thereby suggest inclination of classification information related to each document included in the next target group. Specifically, the group comparing unit extracts a feature value common in documents with a high score corresponding to one piece of classification information (referred to as classification information A) from the group (referred to as a group A) for which the determination of whether the document is related to the lawsuit by the user is completed. The group comparing unit retrieves documents having feature values similar to the extracted feature value from the next target group (group B), and the display control unit controls the arrangement order of the documents according to the degree of similarity of the feature value. A document having a higher rank as a result of the control of the arrangement order may be considered as a document having a higher possibility that the classification information "HOT" is assigned thereto. Thus, it is possible to suggest that there is a high possibility of attachment of the classification information "HOT" when the user reviews the group B, and to thereby enhance the speed of the review.

Further, according to another aspect of the invention, there is provided a forensic method for obtaining digital information recorded in a plurality of computers or a server and analyzing the acquired digital information, including: a step of displaying a document group including a plurality of documents included in the digital information to a user; a step of receiving classification information assigned to a target document which is a document for determination of whether the document is related to a lawsuit by the user from the displayed document group, based on the determination of whether the document is related to the lawsuit by the user; a step of updating a score of each document corresponding to predetermined classification information based on a comparison result between a feature value of the target document of which the classification information is received and a feature value of each document in the document group; and a step of controlling a display order of the documents in the document group displayed by the display unit based on the updated scores.

Further, according to still another aspect of the invention, there is provided a forensic program for acquiring digital information recorded in a plurality of computers and a server and analyzing the acquired digital information, the program allowing a computer to execute functions including: displaying a document group that includes a plurality of documents included in the digital information to a user; receiving classification information assigned to a target document which is a document for determining whether the document is related to a lawsuit by the user in the displayed document group, based on the determination of whether the document is related to the lawsuit by the user; updating a score of each document corresponding to predetermined classification information based on a comparison result between a feature value of the target document of which the classification information is received and a feature value of each document in the document group; and controlling a display order of the documents in the document group to be displayed by the display unit based on the updated scores.

### Advantageous Effects of Invention

The forensic system, the forensic method and the forensic program according to the invention include the step of displaying the document group that includes the plurality of documents included in the digital information to the user, with respect to the display target document; the step of receiving the classification information assigned to the target document which is the document for determination of whether the document is related to the lawsuit by a user in the displayed document group, based on the determination of whether the document is related to the lawsuit by the user; the step of updating the score of each document corresponding to the predetermined classification information based on the comparison result between the feature value of the target document of which the classification information is received and the feature value of each document in the document group; and the step of controlling the display order of the documents in the document group to be displayed in the display unit based on the updated scores. Accordingly, it is possible to reduce the number of documents for which the user performs the relevance determination. Thus, it is possible to reduce the burden of the user for the relevance determination, and to enhance the speed of the relevance determination process.

Further, when the forensic system according to the invention further includes the automatic assigning unit that assigns the classification information to the documents in the document group based on the updated scores, it is possible to automatically assign the classification information to the documents using the determination result of the user.

Further, when the document of the forensic system according to the invention includes the score corresponding to each piece of classification information, and when the score is calculated by score increase or score deduction with respect to the initial score assigned in advance to each document in the document group based on the comparison result between the feature value of the target document associated with the classification information and the feature value of each document to be updated, even though the user mistakenly performs determination and assigns inappropriate classification information, it is possible to converge the scores to appropriate values using determination with respect to other documents.

Further, when the forensic system according to the invention further includes the classifying unit that classifies the document group into the groups based on the predetermined condition and selects at least one target group that is the processing target from the groups, and when the display unit extracts the document group to be displayed to the user from the target group selected by the classifying unit, it is possible to compare feature values between documents having a high degree of similarity.

Further, when the forensic system further includes the group comparing unit that compares the feature value of each document included in the target group with the feature value of each document included in the group for which the control unit completes the control process, and when the display control unit controls the display order of the document group to be displayed from the target group in the display unit based on the comparison result of the group comparing unit, it is possible to suggest in advance classification information with a high possibility of assignment to a target document to the user.

### Brief Description of Drawings

Fig. 1 is a diagram schematically illustrating a process in a first exemplary embodiment of the invention.
Fig. 2 is a flowchart illustrating the process in the first exemplary embodiment of the invention.
Fig. 3 is a block diagram illustrating a forensic system according to the first exemplary embodiment of the invention.
Fig. 4 is a flowchart illustrating processes of a display unit, a display control unit, a classification information receiving unit, a score updating unit, and an automatic assigning unit in the first exemplary embodiment of the invention.
Fig. 5 is a flowchart illustrating a process performed by a classifying unit in an exemplary embodiment of the invention.
Fig. 6 is a schematic view illustrating the process performed by the classifying unit in the exemplary embodiment of the invention.
Fig. 7 is a flowchart illustrating a process performed by a group comparing unit in the exemplary embodiment of the invention.
Fig. 8 is a schematic view illustrating the process performed by the group comparing unit in the exemplary embodiment of the invention.
Fig. 9 is a block diagram illustrating a forensic system according to a second exemplary embodiment of the invention.
Fig. 10 is a flowchart illustrating a process performed by an exclusion determining unit in an exemplary embodiment of the invention.
Fig. 11 is a flowchart illustrating processes of a display unit, a display control unit, a classification information receiving unit, a score updating unit, and an automatic assigning unit in the second exemplary embodiment of the invention.

### Description of Embodiments

### [First exemplary embodiment]

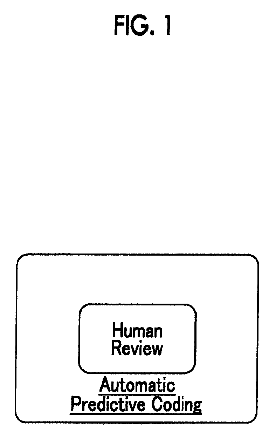

Hereinafter, a first exemplary embodiment of the invention will be described with reference to Figs. 1 to 8.

A forensic system 100 according to the first exemplary embodiment of the invention is a forensic system that acquires digital information recorded in a plurality of computers or a server and analyzes the acquired digital information. The forensic system 100 includes a display unit 210 that displays at least one document in a document group that includes a plurality of documents included in digital information to a user; a classification information receiving unit 410 that receives classification information assigned to a target document for determination of whether the document is related to a lawsuit by a user in the document group, based on the determination of whether the document is related to the lawsuit by the user; a score updating unit 510 that updates a score of each document corresponding to predetermined classification information based on a comparison result between a feature value of the target document of which the classification information is received and a feature value of each document in the document group; and a display control unit 310 that controls a display order of the documents in the document group to be displayed by the display unit 210 based on the updated scores.

Further, in the first exemplary embodiment, the forensic system 100 may include an automatic assigning unit 810 that assigns classification information to a document in the document group based on the updated score.

In addition, in the present exemplary embodiment, the forensic system 100 may include a database 101 that records a score corresponding to the classification information with respect to the document included in the document group and updates the score for each piece of classification information whenever the score updating unit 510 updates the score. The document, the assigned classification information, the score corresponding to each piece of classification information, threshold value excess information, or the like may be recorded in the database 101.

Further, the forensic system 100 may include a classifying unit 910 that classifies the document group into groups based on a predetermined condition and selects at least one target group which is a processing target from the groups, and the display unit 210 may extract a document to be displayed to the user from the target group selected by the classifying unit 910. Further, the forensic system 100 may include a group comparing unit 920 that compares a feature value of each document included in the target group with a feature value of each document included in a group of which the review is completed by the user, and the display control unit 310 may control the display order of the document group to be displayed from the target group based on the comparison result of the group comparing unit 920.

In the present exemplary embodiment, a case where the determination of the relevance to the lawsuit is performed using classification information "HOT" in a document that should be submitted in the lawsuit will be described as an example. This operation for determining whether the document is related to the lawsuit by the system or the user is referred to as "review". In the review, documents which are review targets (here, referred to as target documents) are classified into plural types of documents based on the degree of relevance to the lawsuit or the type of relevance to the lawsuit, and classification information is assigned for each type.

Fig. 1 shows a conceptual example of review using the forensic system 100. When the forensic system 100 is used, the user may execute review (Human Review) while referring to a prediction result (Automatic Predictive Coding) of the review suggested by the forensic system 100. Specifically, if the user reviews a certain document, the forensic system 100 reflects a review result of the Human Review performed by the user in a document which is a review target whenever the Human Review is executed.

Thus, when the user reviews the next document, the user may perform the review according to a determination standard of whether the prediction review result is appropriate or not while viewing the predication review result suggested by the Automatic Predictive Coding. Thus, the user may terminate the review at a point of time when the prediction review suggested by the Automatic Predictive Coding is satisfactory. Accordingly, it is possible to reduce the number of documents for which the user performs the relevance determination. Thus, it is possible to reduce the burden of the user for the relevance determination, and to improve the speed of the relevance determination process.

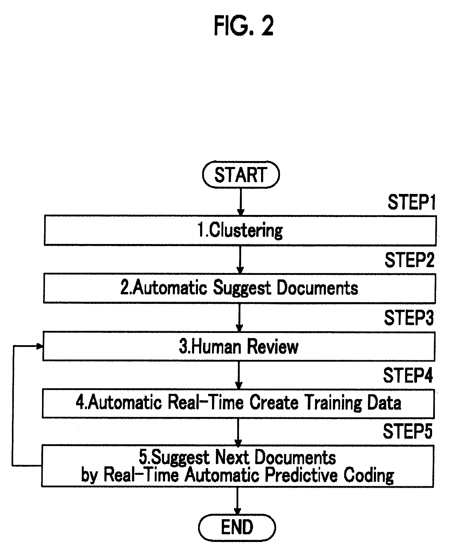

Here, an outline of an entire processing flow in the first exemplary embodiment will be described with reference to Fig. 2. Fig. 2 is a diagram schematically illustrating the entire processing flow in the first exemplary embodiment.

In the forensic system 100, when the process is started, a classification process (clustering) of a document group which is a group of documents into a plurality of groups is performed (STEP 1). Further, a target group which is a current processing target of the forensic system 100 is selected from the classified groups. The target group refers to a group which is a target to be reviewed by the user among the groups.

The document refers to data including one or more words. As an example of the document, electronic mail, presentation material, spreadsheet material, a meeting reference, a contract, an organization chart, a business plan or the like may be used. Further, the document has a score corresponding to each piece of classification information, and the score may be calculated to be updated by score increase to or score deduction from an initial score which is assigned in advance to each document in the document group based on a comparison result between a feature value of a target document associated with the classification information and a feature value of each document. Further, the document group is configured of a plurality of documents. The group refers to a group obtained by classifying the document group.

When performing the classification, the user may input a predetermined condition as a classification condition. The predetermined condition may be automatically input by the forensic system 100. Specifically, the predetermined condition may include a year when a document is prepared, an extension of the document, a creator of the document, a security level of the document, or the like.

Next, an inter-group comparison process (Automatic Suggest Documents) is performed (STEP 2). This means that inclination of a certain document included in the next target group to specific classification information is suggested by comparison of a document included in a group for which the determination of relevance to the lawsuit is completed with a group that is a current target. Specifically, a feature value common in documents with a high score corresponding to one piece of classification information (here, "HOT") is extracted from a group (group A) for which the determination of relevance is completed. Documents having feature values similar to the extracted feature value are retrieved from the next target group (group B), and an arrangement order of the documents is controlled according to the degree of similarity of the feature value. That is, document having a higher rank may be considered as a document having a high possibility that the classification information "HOT" is assigned thereto. Thus, it is possible to suggest that there is a high possibility of attachment of the classification information "HOT" when the user reviews the group B, and to thereby enhance the accuracy and speed of the review.

The score refers to a value obtained by quantitatively evaluating the strength of relevance between a document and predetermined classification information. For example, a case where "Responsive" indicating that a document is related to a lawsuit and "HOT" indicating that a document is an especially important document in a lawsuit in the review are used will be described. In this case, each document may include secure regions where a "Hot" score and a "Responsive" score are recorded in a database. Further, when any one of the two types of scores exceeds a predetermined threshold value, classification information corresponding to the excessive score may be assigned.

The feature value refers to a value used to measure the degree of similarity between respective documents. The feature value may be calculated using the tendency information including the type of each word that frequently appears in the document, an evaluation value of each word, and the number of appearances of each word.

Then, the user performs the review (Human Review) (STEP 3). Whenever the review is performed, the forensic system 100 calculates a score of each document using a review result (Automatic Real-time Create Training Data) (STEP 4). Further, as documents in the target group are rearranged in the order of the calculated scores, the user may suggest a review result of the next document when the user reviews the next document (Suggest Next Documents by Real-Time Automatic Predictive Coding) (STEP 5). The forensic system 100 repeats the processes of STEP 3 to STEP 5 with respect to the target group until it is determined that the review of the documents rearranged by the user is terminated. The reason is as follows. That is, since the rearranged documents indicate that specific classification information has a high score in an descending order, when it can be reliably determined that a certain document is not related to a lawsuit from the viewpoint of the user, it is determined that all documents having lower ranks with reference to the certain document are not related to the lawsuit. Thus, the user can terminate the relevance determination without reviewing all the documents.

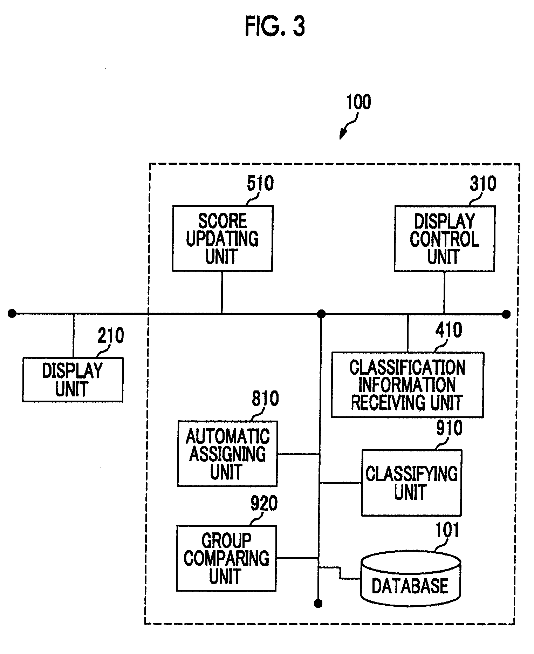

Fig. 3 is a block diagram of the forensic system 100 according to the first exemplary embodiment.

In the first exemplary embodiment, as shown in Fig. 3, the forensic system 100 includes a display unit 210, a display control unit 310, a classification information receiving unit 410, a score updating unit 510, an automatic assigning unit 810, a classifying unit 910, a group comparing unit 920, and a database 101.

The forensic system 100 is a computer or a server, and is operated as various functional units by executing a program recorded in a ROM by a CPU based on various inputs. The program may be stored on a recording medium such as a CD-ROM, or may be distributed through a network such as the Internet in order to be installed in the computer. Further, the display unit 210 is a device having a display function such as a display, a monitor or a tablet PC, which is operated by a user and is used to confirm a target document and to assign classification information. In the first exemplary embodiment, the forensic system 100 is not provided with the display unit 210 in the system, but may be configured to include the display unit 210 in the system.

Further, the respective functional units of the forensic system 100 and the display unit 210 are connected to each other through a wired or wireless network. The respective functional units and the display unit 210 may utilize cloud computing.

The display unit 210 displays at least one document in the document group to the user as arranged by the display control unit 310.

The display control unit 310 controls the order of documents displayed by the display unit 210. In the first exemplary embodiment, the display control unit 310 sends a display control instruction to the display unit 210 to display the documents in the descending order of scores of the documents. As a result, the user views the documents rearranged in the order of the scores through the display control unit 310, to thereby determine whether it is necessary to continue the review. That is, when a target document that is being reviewed is not obviously related to a lawsuit, since documents arranged in lower ranks with reference to the target document have lower scores, it may be determined that the documents are not related to the lawsuit without the review.

The classification information receiving unit 410 receives classification information assigned to the target document after the review by the user.

The classification information refers to information which is assigned to a document that is a classification target and indicates relevance to a lawsuit to be easily used therein. The classification information may be recorded as accessory information, or may be recorded in such a manner that a correspondence relationship between the classification information and the document is recorded in the database 101. The classification information may include "Responsive" indicating that a target document is related to a lawsuit, "HOT" indicating that a document is relatively closely related to a lawsuit and is an especially important document, or "Non-Responsive" indicating that a document is not related to a current lawsuit, for example. In the first exemplary embodiment, a "HOT" tag is assigned as the classification information, and the tag is managed in the database 101 in association with a document.

The score updating unit 510 compares a feature value of a target document of which classification information is received by the classification information receiving unit 410 with a feature value of a document included in the document group, and updates a score corresponding to the received classification information. The score updating unit 510 may perform score increase or score deduction according to a matching rate of the feature values, for example. In the first exemplary embodiment, the document that is a comparison target may not include the target document, or may include the target document as an updating target. For example, when the target document is included in the comparison target, since the feature values completely match each other, a corresponding point is added to the score to be updated.

The document may assign an initial score based on a predetermined condition. For example, the initial score may be calculated based on words that appear in a document, and an evaluation value of each word. In the first exemplary embodiment, the initial score is calculated based on the predetermined condition, and is assigned to all the documents as a specific value. Score increase or score deduction is performed with respect to the initial score to update the score.

The automatic assigning unit 810 automatically determines and assigns classification information suitable for each document according to a score. The automatic assigning unit 810 may provide a threshold value for each type of classification information, and may assign corresponding classification information to a document of which a score exceeds the threshold value. In the first exemplary embodiment, α is given as a threshold value of the "HOT" score. That is, after the score updating unit 510 updates the "HOT" score of each document, the automatic assigning unit 810 assigns the "HOT" tag to a document having a score exceeding α as a result of the updating as classification information.

The group comparing unit 920 performs a process of comparing features of documents between groups. By using feature values of documents included in a group of which the review is completed by the user as comparison targets, it is possible to suggest inclination of documents included in the next target group to specific classification information. Specifically, a feature value common in documents having high scores corresponding to one piece of classification information (here, "HOT") is extracted from the group (group A) of which the review of the user is completed. The group comparing unit 920 retrieves documents having feature values similar to the extracted feature value from the next target group (group B), and the display control unit 310 controls the arrangement order of the documents according to the degree of similarity of the feature value. A document having a higher rank as a result of the control of the arrangement order may be considered as a document having a higher possibility that the classification information "HOT" is assigned thereto. Thus, it is possible to suggest that there is a high possibility of attachment of the classification information "HOT" when the user reviews the group B, and to thereby enhance the accuracy and speed of the review.

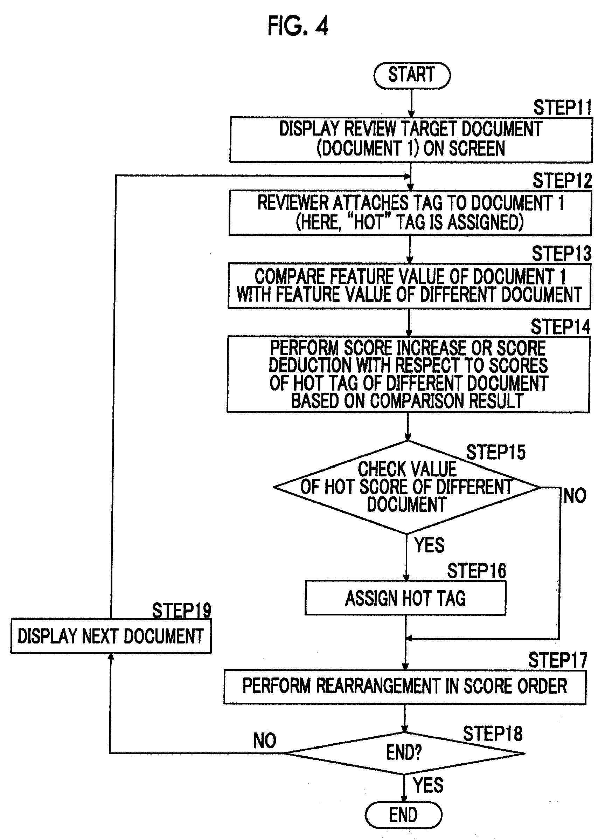

A processing flow of the display unit 210, the display control unit 310, the identification receiving unit 410, the score updating unit 510, and the automatic assigning unit 810 will be described with reference to Fig. 4. Fig. 4 is a flowchart indicating processes of the display unit 210, the display control unit 310, the identification receiving unit 410, the score updating unit 510, and the automatic assigning unit 810, in the present exemplary embodiment.

The display unit 210 displays Document 1 that is a review target document of a document group (STEP 11). A user reviews Document 1, assigns a "HOT" tag to Document 1, and the classification information receiving unit 410 receives the "HOT" tag (STEP 12).

The score updating unit 510 compares a feature value of Document 1 with a feature value of a different document to update the score of each document with respect to the "HOT" tag (STEP 13). In the first exemplary embodiment, the score updating unit 510 does not update the score with respect to the document of which the review is completed by the user.

The score updating unit 510 performs score increase or score deduction with respect to the score of the "HOT" tag of the different document based on the comparison result (STEP 14).

After the score is updated, the automatic assigning unit 810 checks whether a value of the updated score exceeds α (STEP 15). When there is a document of which a score exceeds α (STEP 15: YES), the automatic assigning unit 810 assigns the "HOT" tag to the document (STEP 16). The tag is not assigned to a document of which a score does not exceed α (STEP 15: NO).

After the automatic assignment is performed, the display control unit 310 performs a control for rearranging documents in the descending order of scores after updating (STEP 17). When it is determined by the user that the process is to be terminated (STEP 18: YES), the process is terminated. When it is determined by the user that the process is not to be terminated (STEP 18: NO), the display unit 210 displays the documents rearranged by the display control unit 310 in a descending order of scores (STEP 19). In this case, the user assigns the tag to a document having the highest rank again (STEP 12: second circulation). Thereafter, until it is determined by the user that the process is to be terminated, the processes of STEP 12 to STEP 19 are circulated.

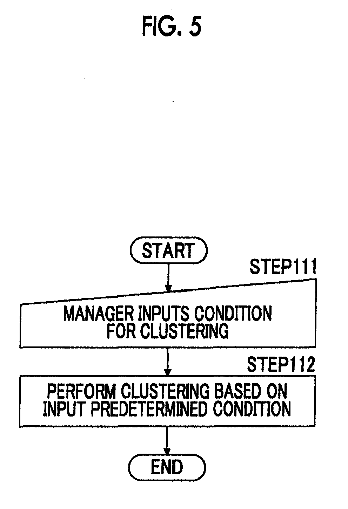

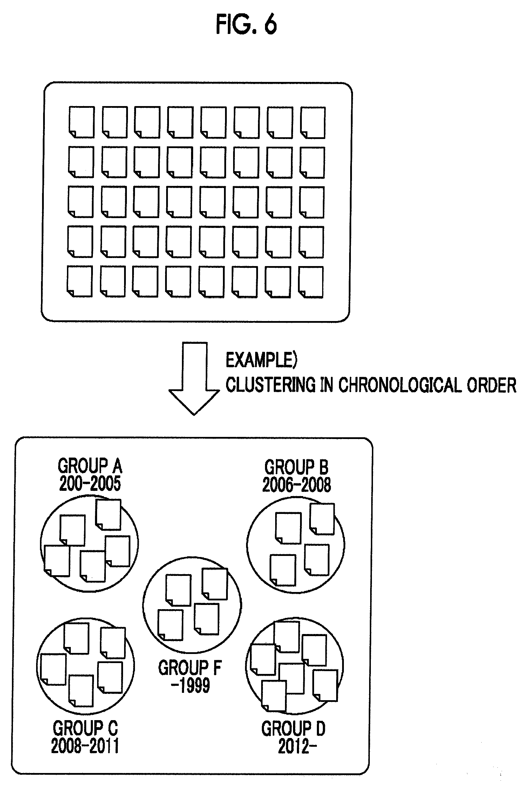

Fig. 5 is a diagram illustrating a processing flow of the classifying unit 910. The classifying unit 910 receives a condition input by a user (STEP 111). Then, the classifying unit 910 performs a classification process based on the input predetermined condition (STEP 112). Fig. 6 is a diagram schematically illustrating an execution result of the classification process.

An upper part in Fig. 6 shows documents in a document group. For example, when the user inputs "year" as the classification condition, the documents in the document group are classified into groups in a chronological order, as shown in a lower part in Fig. 6.

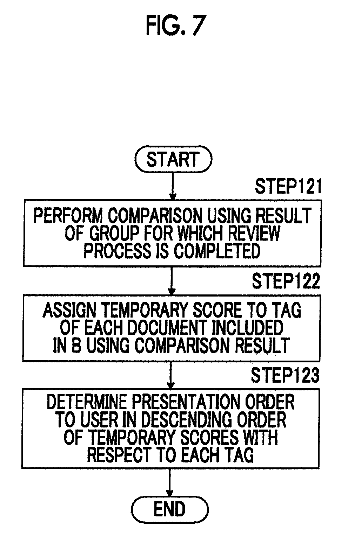

Fig. 7 is a diagram illustrating a processing flow of the group comparing unit 920.

The group comparing unit 920 compares a group of which the review is completed (referred to as group A) with a group that is the next review target (referred to as group B) (STEP 121). Specifically, the group comparing unit 920 compares a feature value of a document (referred to as Document 1) included in Group A with a feature value of a document (referred to as Document 2) included in Group B. For example, when the feature value of Document 2 is similar to the feature value of Document 1, a temporary score is assigned to each piece of classification information related to Document 2 based on a score and the degree of similarity of each piece of classification information related to Document 1 (STEP 122).

The temporary score refers to a score that is temporarily assigned to each document so that the group comparing unit 920 can perform the comparison process. Thus, the temporary score is not used in the classification information assignment process performed by the automatic assigning unit 810. In the first exemplary embodiment, the group comparing unit 920 performs the process using the temporary score, but may directly update a normal score to perform the process.

The group processing unit arranges documents in a descending order of the temporary scores assigned to the respective pieces of classification information (STEP 123).

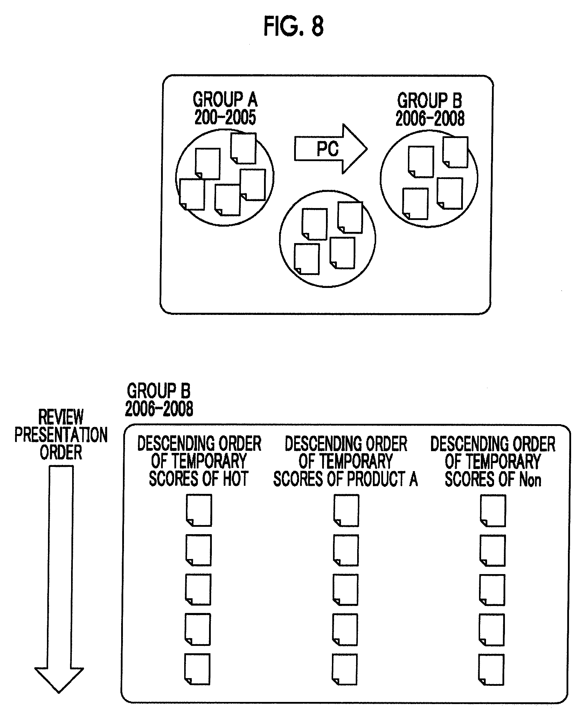

Fig. 8 is a diagram schematically illustrating a state of the processes of the group comparing unit 920 and the display control unit 310. A processing result of group A of which the review is completed is reflected to group B (an upper part in Fig. 8), and the display control unit 310 arranges documents included in group B in a descending order of temporary scores with reference to respective pieces of classification information (a lower part in Fig. 8). Thus, the user may sequentially perform the review of documents having a high possibility that the "HOT" tag is attached thereto.

### [Second exemplary embodiment]

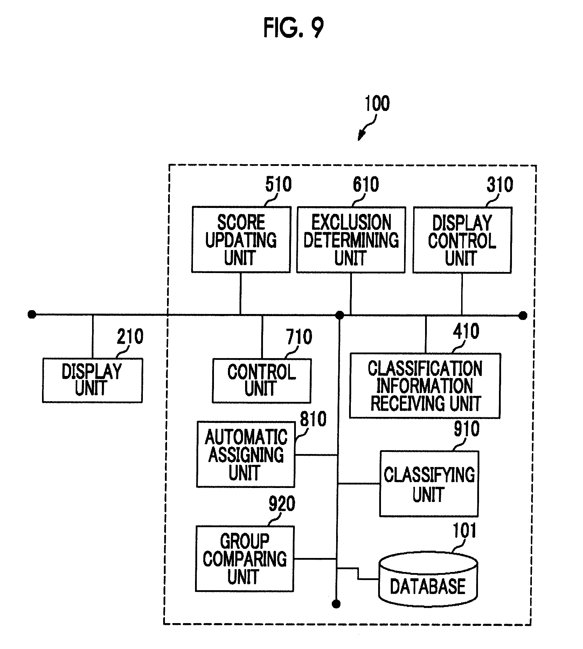

Hereinafter, an exemplary embodiment of the invention will be described with reference to Figs. 9 to 11.

A forensic system 100 according to the second exemplary embodiment of the invention is a forensic system that acquires digital information recorded in a plurality of computers or a server and analyzes the acquired digital information. The forensic system 100 includes a display unit 210 that displays at least one document in a document group that includes a plurality of documents included in digital information to a user; an classification information receiving unit 410 that receives classification information assigned to a target document for determination of whether the document is related to a lawsuit by a user in the document group, based on the determination of whether the document is related to the lawsuit by the user; a score updating unit 510 that updates a score of each document corresponding to predetermined classification information based on a comparison result between a feature value of the target document of which the classification information is received and a feature value of each document in the document group; and a display control unit 310 that controls a display order of the documents in the document group to be displayed by the display unit 210 based on the updated scores.

Further, in the second exemplary embodiment, the forensic system 100 may further include an automatic assigning unit 810 that assigns classification information to a document in the document group based on the updated score.

In addition, in the present exemplary embodiment, the forensic system 100 may further include a database 101 that records a score corresponding to the classification information with respect to the document and updates the score for each piece of classification information whenever the score updating unit 510 updates the score. The document, the assigned classification information, the score corresponding to each piece of classification information, threshold value excess information, or the like may be recorded in the database 101.

Further, in the present exemplary embodiment, the forensic system 100 may further include an exclusion determining unit 610 that determines that a document of which a score reaches a specific value is excluded from candidates of documents to be displayed by the display unit 210, and a control unit 710 that performs a control so that processes of the display unit 210, the classification information receiving unit 410, the score updating unit 510, and the display control unit 310, and the exclusion determining unit 610 can be repeatedly executed until the number of the documents determined to be excluded exceeds a predetermined value.

Fig. 9 is a block diagram of the forensic system 100 according to the second exemplary embodiment.

In the second exemplary embodiment, as shown in Fig. 9, the forensic system 100 includes the display unit 210, the display control unit 310, the classification information receiving unit 410, the score updating unit 510, the exclusion determining unit 610, the automatic assigning unit 810, the control unit 710, the classifying unit 910, the group comparing unit 920, and the database 101.

In a review process according to the present exemplary embodiment, a process of determining relevance to a lawsuit using a "HOT" tag as classification information is performed.

When a score is updated, the exclusion determining unit 610 determines that a document of which a score after updating reaches a specific value is excluded from candidate targets of documents to be displayed by the display unit 210. The exclusion determining unit 610 performs termination determination for each piece of classification information as a previous stage of the exclusion determination, and performs the exclusion determination with respect to the document of which the termination determination is performed with respect to all pieces of classification information. In the present exemplary embodiment, a threshold value that is a specific value includes two values β1 and β2 (β1>β2). When the score exceeds β1 due to score increase or when the score becomes smaller than β2 due to score deduction, the exclusion determining unit 610 performs the termination determination with respect to the classification information. In the first exemplary embodiment, there are three types of classification information to be assigned. In this case, the exclusion determining unit 610 excludes a document having passed through the exclusion determination with respect to the three types of classification information from the candidates of the target documents.

Further, when a score for one type of classification information reaches β1 or β2 and the termination determination is performed, the exclusion determining unit 610 may assign a mark indicating that the exclusion is performed with respect to the classification information having the excessive score to the corresponding document.

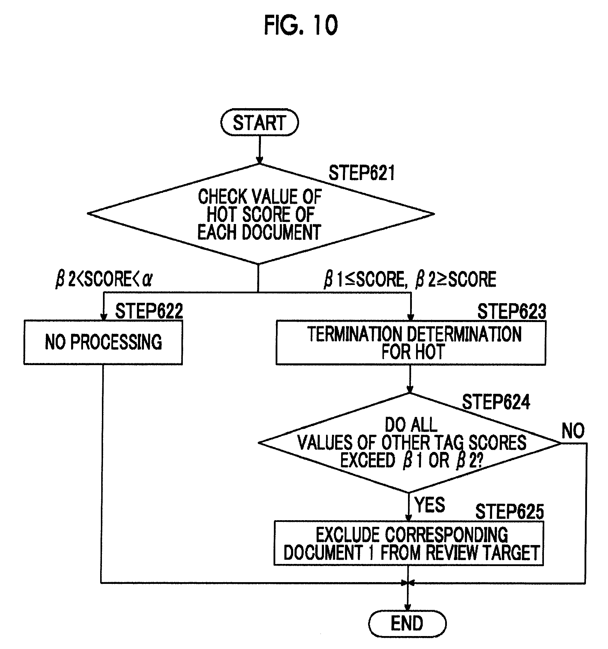

The processes of the exclusion determining unit 610 will be described with reference to Fig. 10. Fig. 10 is a flowchart illustrating a processing flow of the exclusion determining unit 610 when a user assigns a "HOT" tag to Document 1 as classification information in review. Since the user performs the process of assigning the "HOT" tag as the classification information in review, the exclusion determining unit 610 also performs exclusion determination for each document with respect to the "HOT" tag.

The exclusion determining unit 610 checks a value of a "HOT" score of each document (STEP 621). Here, α represents a threshold value which is a determination reference when the automatic assigning unit 810 performs a classification information assignment process. The exclusion determining unit 610 does not perform any process with respect to a document of which a score is larger than β2 and is smaller than α (STEP 622). On the other hand, the exclusion determining unit 610 performs the termination determination for the "HOT" tag with respect to a document of which a score is equal to or greater than β1 or equal to or smaller than β2 (STEP 623). In this case, the exclusion determining unit 610 also determines scores of other classification information (STEP 624), and when all the scores are equal to or greater than β1 or equal to or smaller than β2 (STEP 624: YES), the exclusion determining unit 610 excludes the corresponding documents from being review targets (STEP 625). When even one piece of classification information has a score which is smaller than β1 and greater than β2, the exclusion determining unit 610 terminates the process without performing the exclusion determination with respect to the documents (STEP 624: NO).

The control unit 710 performs control so that the processes of the display unit 210, the classification information receiving unit 410, the score updating unit 510, the display control unit 310, and the exclusion determining unit 610 can be repeatedly executed. The control unit 710 may repeat the processes one by one in a cycle. Further, the control unit 710 may repeat the processes in such a manner that a predetermined amount of processes are executed in a batch manner and subsequent processes are then executed. In the second exemplary embodiment, the display control unit 310 terminates the control process when the exclusion determination is performed with respect to all the documents included in the group to be described later.

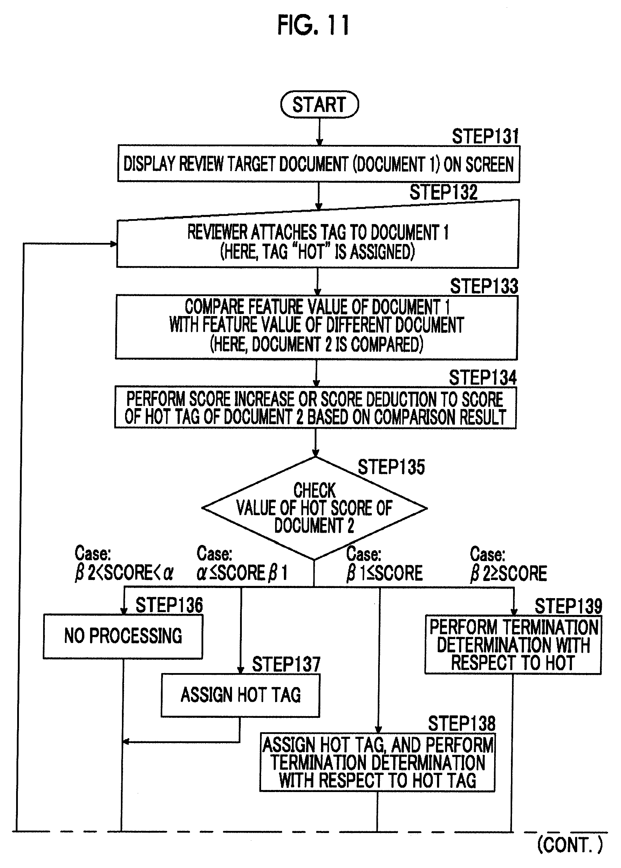

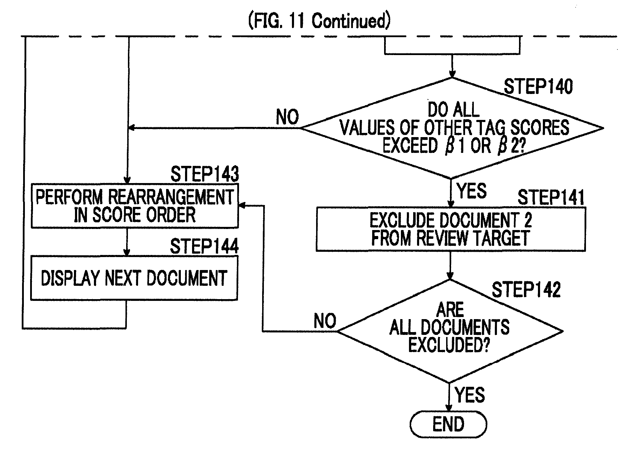

Fig. 11 is a flowchart illustrating an outline of the entire processes in the present exemplary embodiment. Here, a case where a user reviews Document 1 and attaches a "HOT" tag thereto will be described as an example.

First, the display unit 210 displays Document 1 on a screen (STEP 130). The user assigns the "HOT" tag to Document 1 displayed by the display unit 210 as classification information (STEP 131), and the classification information receiving unit 410 receives the "HOT" tag as the classification information assigned to Document 1 by the user.

The score updating unit 510 compares a feature value of Document 1 with a feature value of a different document (here, referred to as document 2) to update a score of each document (STEP 132). In the second exemplary embodiment, the score updating unit 510 does not perform the score updating process with respect to the document of which the review is completed by the user. Thus, Document 1 is subject to termination determination when the user completes the review.

The score updating unit 510 performs score increase or score deduction with respect to a score of a "HOT" tag of Document 2 based on the comparison result (STEP 133).

After the score is updated, the exclusion determining unit 610 checks a value of the "HOT" score in Document 2 (STEP 134). When the "HOT" score of Document 2 is greater than β1 and smaller than α, the exclusion determining unit 610 does not perform the process (STEP 135). On the other hand, the "HOT" score is equal to or greater than α and is smaller than β1, the exclusion determining unit 610 assigns the "HOT" tag to Document 2 (STEP 136).

When the score of Document 2 is equal to or greater than β1, the exclusion determining unit 610 performs the termination determination with respect to "HOT" (STEP 137). Here, if the "HOT" tag is not attached to Document 2, an identifier assignment process performed by the automatic assigning unit 810 is executed.

Further, when the score of Document 2 is equal to or smaller than β2, the exclusion determining unit 610 performs the termination determination with respect to the "HOT" (STEP 138). When the processes of STEP 137 and STEP 138 are performed, the exclusion determining unit 610 checks whether a score of different classification information related to Document 2 reaches β1 or β2 (STEP 139). As a result of the check, when the score reaches β1 or β2 (STEP 139: YES), the exclusion determining unit 610 excludes Document 2 from display candidates in the display unit 210 (STEP 140). After completing the process of STEP 141, the control unit 710 checks whether all documents are determined to be excluded (STEP 141), and when all the documents are determined to be excluded (STEP 141: YES), the exclusion determining unit 610 terminates the process.

After the process of STEP 135 or STEP 136 is completed, or when it is determined that the score is smaller than β1 and greater than β2 in STEP 139 (STEP 139: NO), the control unit 710 causes the procedure to proceed to the next process. Here, the documents determined not to be excluded are rearranged in an ascending order of values of updated scores by the display control unit 310 (STEP 143).

The documents are rearranged by the display control unit 310, and then, are displayed by the display unit 210 in an arrangement order, that is, in a descending order of scores (STEP 144).

Other configurations and functions are the same as in the first exemplary embodiment.

The forensic system 100 includes the display unit 210 that displays a document group that includes a plurality of documents included as digital information to a user, with respect to a display target document; the classification information receiving unit 410 that receives classification information assigned to a target document for determination of whether the document is related to a lawsuit by a user in the displayed document group, based on the determination of whether the document is related to the lawsuit by the user; the score updating unit 510 that updates a score of each document corresponding to predetermined classification information based on a comparison result between a feature value of the target document of which the classification information is received and a feature value of each document in the document group; and a display control unit 710 that controls a display order of the documents in the document group to be displayed by the display unit 210 based on the updated scores. Thus, it is possible to reduce the number of documents for which the user performs the relevance determination. Thus, it is possible to reduce the burden of the user for the relevance determination, and to enhance the speed of the relevance determination process.

Further, when the forensic system 100 further includes the automatic assigning unit 810 that assigns classification information to documents in the document group based on the updated scores, it is possible to automatically assign the classification information to the documents using the determination result of the user.

Further, when the document of the forensic system 100 has a score corresponding to each piece of classification information, and when the score is calculated by score increase or score deduction with respect to an initial score assigned in advance to each document in the document group based on a comparison result between a feature value of a target document associated with the classification information and a feature value of each document to be updated, when a score is updated, even though the user mistakenly performs determination and assigns inappropriate classification information, it is possible to converge the scores to appropriate values using determination with respect to other documents.

Further, when the forensic system 100 further includes the classifying unit 910 that classifies the document group into groups based on a predetermined condition and selects at least one target group that is a processing target from the groups, and when the display unit 210 extracts a document group to be displayed to the user from the target group selected by the classifying unit 910, it is possible to compare feature values between documents having a high degree of similarity.

Further, when the forensic system 100 further includes the group comparing unit 920 that compares the feature value of each document included in the target group with the feature value of each document included in a group for which the control unit 710 completes the control process, and when the display control unit 310 controls a display order of a document group to be displayed from the target group in the display unit 210 based on the comparison result of the group comparing unit 920, it is possible to suggest in advance classification information with a high possibility of assignment to a target document to the user.

### Reference Signs List

- 100: FORENSIC SYSTEM
- 101: DATABASE
- 210: DISPLAY UNIT
- 310: DISPLAY CONTROL UNIT
- 410: CLASSIFICATION INFORMATION RECEIVING UNIT
- 510: SCORE UPDATING UNIT
- 610: EXCLUSION DETERMINING UNIT
- 710: CONTROL UNIT
- 810: AUTOMATIC ASSIGNING UNIT
- 910: CLASSIFYING UNIT
- 920: GROUP COMPARING UNIT

## Claims

1. A forensic system that acquires digital information recorded in a plurality of computers or a server and analyzes the acquired digital information, comprising:
a display unit that displays at least one document in a document group that includes a plurality of documents included in the digital information to a user;
a classification information receiving unit that receives classification information assigned to a target document which is a document for determination of whether the document is related to a lawsuit by a user in the document group, based on the determination of whether the document is related to the lawsuit by the user;
a score updating unit that updates a score of a document in the document group corresponding to predetermined classification information based on a comparison result between a feature value of the target document of which the classification information is received and a feature value of the document in the document group; and
a display control unit that controls a display order of the documents in the document group to be displayed by the display unit based on the updated scores.

2. The forensic system according to claim 1, further comprising:
an automatic assigning unit that assigns the classification information to the documents in the document group based on the updated score.

3. The forensic system according to claim 1 or 2, further comprising:
an exclusion determining unit that determines that a document of which a score reaches a specific value is excluded from candidates of documents to be displayed by the display unit; and
a control unit that performs a control so that processes of the display unit, the classification information receiving unit, the score updating unit, and the display control unit, and the exclusion determining unit can be repeatedly executed until the number of the documents determined to be excluded exceeds a predetermined value.

4. The forensic system according to any one of claims 1 to 3,
wherein the score updating unit calculates the feature value using tendency information including the type of each word that frequently appears in the document, an evaluation value of each word, and the number of appearances of each word.

5. The forensic system according to any one of claims 1 to 4,
wherein the document has a score corresponding to the classification information, and
the score is calculated by adding or deducting a value calculated based on a comparison result between a feature value of a target document associated with the classification information and a feature value of each document in the document group to or from an initial score assigned in advance to each document in the document group.

6. The forensic system according to any one of claims 1 to 5, further comprising:
a database that records a score corresponding to the classification information with respect to the document included in the document group and updates the score for each piece of classification information whenever the score updating unit updates the score.

7. The forensic system according to any one of claims 1 to 6, further comprising:
a classifying unit that classifies the document group into groups based on a predetermined condition and selects at least one target group that is a processing target from among the groups,
wherein the display control unit extracts a document group to be displayed to the user from the target group selected by the classifying unit.

8. The forensic system according to claim 7, further comprising:
a group comparing unit that compares a feature value of each document included in the target group with a feature value of each document included in the group for which the determination of whether the document is related to the lawsuit by the user is completed,
wherein the display control unit controls a display order of a document group to be displayed from the target group to the user through the display unit based on a comparison result of the group comparing unit.

9. A forensic method for acquiring digital information recorded in a plurality of computers and a server and analyzing the acquired digital information, comprising:
a step of displaying a document group that includes a plurality of documents included in the digital information to a user;
a step of receiving classification information assigned to a target document which is a document for determination of whether the document is related to a lawsuit by a user in the displayed document group, based on the determination of whether the document is related to the lawsuit by the user;
a step of updating a score of each document corresponding to predetermined classification information based on a comparison result between a feature value of the target document of which the classification information is received and a feature value of each document in the document group; and
a step of controlling a display order of the documents in the document group to be displayed by the display unit based on the updated scores.

10. A forensic program for acquiring digital information recorded in a plurality of computers and a server and analyzing the acquired digital information, the program allowing a computer to execute functions comprising:
displaying a document group that includes a plurality of documents included in the digital information to a user;
receiving classification information assigned to a target document which is a document for determination of whether the document is related to a lawsuit by a user in the displayed document group, based on the determination of whether the document is related to the lawsuit by the user;
updating a score of each document corresponding to predetermined classification information based on a comparison result between a feature value of the target document of which the classification information is received and a feature value of each document in the document group; and
controlling a display order of the documents in the document group to be displayed by the display unit based on the updated scores.
